# EUROPÄISCHE PATENTANMELDUNG

(11) **EP 4 677 993 A1**
(43) Veröffentlichungstag der Anmeldung: **14.01.2026**
(21) Anmeldenummer: 25184365.2
(22) Anmeldetag: 23.06.2025
(51) Int. Cl.: A01F 15/07, A01F 15/08

(54) **LANDWIRTSCHAFTLICHE RUNDBALLENPRESSE**

(30) Priorität: 12.07.2024 DE 102024119827
(71) Anmelder: Usines CLAAS France S.A.S, 57140 St. Rémy / Woippy (FR)
(72) Erfinder: Fuchs, Volker, 54439 Saarburg (DE); Wucher, Renaud, 57070 Metz (FR); Batancourt, Grégory, 57130 Vionville (FR)
(74) Vertreter: CLAAS Gruppe

(57) **Zusammenfassung**

Die vorliegende Erfindung betrifft eine landwirtschaftliche Rundballenpresse (1) mit einer Einrichtung (7) zum Aufnehmen von Erntegut von einer landwirtschaftlichen Fläche, einer Presskammer (5) und ein die Presskammer (5) umfangsseitig begrenzendes Pressmittel (6) zum Pressen des aufgenommenen Ernteguts zu einem Rundballen (B) sowie einer Einrichtung (9) zum Ummanteln eines gepressten Rundballens (B) mit von über eine Vorratsrolle (V) bereitgestelltem Hüllmaterial (H). Die Einrichtung (9) zum Ummanteln umfasst eine Spannvorrichtung (11) zum Spannen des Hüllmaterials (H) während eines Ummantelns eines gepressten Rundballens (B). Die Rundballenpresse (1) ist dadurch gekennzeichnet, dass die Spannvorrichtung (11) zwei drehbewegliche Spannrollen (12, 12.1, 12.2) umfasst, wobei das Hüllmaterial (H) zwischen den Spannrollen (12, 12.1, 12.2) geführt ist, wobei die Spannrollen (12, 12.1, 12.2) während eines Ummantelns eines gepressten Rundballens (B) aktiv antreibbar sind und zwar derart, dass sich die Spannrollen (12, 12.1, 12.2) mit einer relativen Umfangsgeschwindigkeit (U, U_{R1}) zueinander in gegensinnige Drehrichtungen (D, D₁, D₂) bewegen.

## Beschreibung

Die vorliegende Anmeldung betrifft eine landwirtschaftliche Rundballenpresse gemäß dem Oberbegriff des unabhängigen Patentanspruchs 1 sowie ein Verfahren zum Betreiben einer landwirtschaftlichen Rundballenpresse gemäß dem Oberbegriff des unabhängigen Patentanspruchs 15.

Herkömmliche landwirtschaftliche Rundballenpressen umfassen sogenannte Einrichtungen zum Aufnehmen und Fördern von Erntegut, die das Erntegut im Betrieb der Rundballenpresse vom Boden einer landwirtschaftlichen Fläche aufnehmen und in eine Presskammer der Rundballenpresse fördern, in der das Erntegut zu einem Rundballen geformt wird. Ein Pressengehäuse solcher Rundballenpressen umfasst in der Regel ein feststehendes Pressengehäuseteil und eine relativ zu dem feststehenden Pressengehäuseteil schwenkbare Auswurfklappe. Die Presskammer der Rundballenpresse ist in dem Pressengehäuse ausgebildet, wobei die Rundballenpresse ein Pressmittel umfasst, das die Presskammer umfangsseitig begrenzt. Das Pressmittel kann als Pressriemen ausgebildet sein oder aus einer Vielzahl von voneinander beabstandeten Pressrollen gebildet werden. Mittels des Pressmittels wird das über die Einrichtungen zum Aufnehmen und Fördern in die Presskammer gefördertes Erntegut zu einem Rundballen geformt. Zum Auswerfen des in der Presskammer geformten Rundballens wird die Auswurfklappe von einer Schließstellung in eine Öffnungsstellung verschwenkt.

Herkömmliche Rundballenpressen umfassen weiterhin Einrichtungen zum Ummanteln des gebildeten Rundballens mit einem elastischen, bahnförmigen Wickel- bzw. Hüllmaterial, welches als Film bzw. Folie oder Netz ausgebildet sein kann. Eine solche Einrichtung zum Ummanteln kann innerhalb der Rundballenpresse angeordnet sein, sodass der gebildete Rundballen unmittelbar in der Presskammer ummantelt werden kann. Weiterhin kann eine solche Einrichtung auch der Presskammer nachgeschaltet angeordnet sein, sodass der Rundballen nach einem Auswurf aus der Presskammer ummantelt werden kann. Eine der Presskammer nachgeschaltet angeordnete Einrichtung zum Ummanteln wird üblicherweise auch als Wickeleinrichtung bezeichnet.

Wesentlich für das Ummanteln des Rundballens mit Hüllmaterial, insbesondere dann, wenn ein Film bzw. eine Folie genutzt wird, ist es das Hüllmaterial zu spannen, damit das Erntegut in seiner gepressten bzw. verdichteten Form verbleibt, wenn es auf der landwirtschaftlichen Fläche abgelegt wird. Das Spannen des Hüllmaterials hat neben der Tatsache, dass sichergestellt wird, dass der Rundballen fest um den Umfang gewickelt wird, weiterhin den Vorteil, dass die Menge an Hüllmaterial, die benötigt wird, um einen Rundballen mit einer bestimmten Anzahl von Windungen um den Umfang zu wickeln, reduziert wird, was wiederum dafür sorgt, dass eine geringere Menge an Hüllmaterial pro Rundballen benötigt wird, wodurch es zu Kosteneinsparungen kommt.

Aus der Patentanmeldung DE 100 26 066 A1 ist in diesem Zusammenhang beispielsweise eine landwirtschaftliche Rundballenpresse mit einer Vorrichtung zum Ummanteln des Rundballens mit einem Netz bekannt. Die Vorrichtung umfasst eine Bremse, die direkt auf eine Vorratsrolle mit Hüllmaterial wirkt, wodurch eine Spannung des Hüllmaterials bei Abzug des Hüllmaterials von der Vorratsrolle und Zuführung desselben in die Presskammer verursacht wird.

Nachteilig bei einer solchen Ausgestaltung ist, dass die Bremse in der Regel sehr empfindlich auf die vom sich in der Presskammer drehenden Rundballen auf das Hüllmaterial ausgeübte Zug-/Förderkraft eingeregelt werden muss, um einen hinreichenden Spannungszustand des Hüllmaterials einerseits sicherzustellen, gleichzeitig andererseits ein Reißen des Hüllmaterials zu verhindern. Ein solcher Regelprozess ist steuerungstechnisch komplex und bedarf kostenintensiver Komponenten zur Umsetzung. Ferner kann es bei gewissen Erntegütern und Bedingungen gelegentlich auftreten, dass bei einer zu stark eingestellten Bremse das Hüllmaterial den sich in der Presskammer drehenden Rundballen abbremst, fast gänzlich stoppt, was aufgrund der sich weiterdrehenden Pressmittel zu einem Verschleiß bzw. partieller Zerstörung des bereits auf den Rundballen applizierten Hüllmaterials führen kann.

Ausgehend von dem vorstehend genannten Stand der Technik ist es demnach die Aufgabe der vorliegenden Erfindung, die beschriebenen Nachteile des Standes der Technik auszuräumen und insbesondere eine landwirtschaftliche Rundballenpresse anzugeben, welche ein effizienteres und prozesssichereres Ummanteln eines Rundballens mit Hüllmaterial erlaubt.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Rundballenpresse Gegenstand der entsprechenden abhängigen Patentansprüche 2 bis 14 sind.

Demnach betrifft die vorliegende Erfindung eine landwirtschaftliche Rundballenpresse, die eine Einrichtung zum Aufnehmen von Erntegut von einer landwirtschaftlichen Fläche, eine Presskammer und ein die Presskammer umfangsseitig begrenzendes Pressmittel zum Pressen des aufgenommenen Ernteguts zu einem Rundballen sowie eine Einrichtung zum Ummanteln eines gepressten Rundballens mit einem elastischen, bahnförmigen Hüllmaterial, welches mittels einer Vorratsrolle bereitgestellt ist, umfasst. Die Einrichtung zum Ummanteln umfasst eine Spannvorrichtung zum Spannen des Hüllmaterials während eines Ummantelns eines gepressten Rundballens. Die landwirtschaftliche Rundballenpresse ist dadurch gekennzeichnet, dass die Spannvorrichtung zwei drehbewegliche Spannrollen umfasst, wobei das Hüllmaterial zwischen den Spannrollen geführt ist. Die Spannrollen sind während eines Ummantelns eines gepressten Rundballens aktiv antreibbar und zwar derart, dass sich die Spannrollen mit einer relativen Umfangsgeschwindigkeit zueinander in gegensinnige Drehrichtungen bewegen.

Durch die erfindungsgemäße Ausgestaltung der Spannvorrichtung wird das Hüllmaterial aktiv von den Spannrollen der Spannvorrichtung in Förderrichtung hin zum Rundballen mitbewegt. Nicht das Hüllmaterial sorgt somit aufgrund des Reibschlusses für eine Bewegung der Spannrollen, sondern die Spannrollen selbst treiben das Hüllmaterial gemeinsam mit der von dem sich bewegenden Rundballen auf das Hüllmaterial ausgeübten Zug- bzw. Zuführkraft an. Neben dem Zuführen des Hüllmaterials wird das Hüllmaterial aufgrund der relativen Umfangsgeschwindigkeit der Spannrollen zueinander gleichzeitig schonend gespannt, wodurch das Ummanteln insgesamt prozesssicher und ökonomisch abläuft. Die Komponenten einer Einrichtung zum Ummanteln müssen nicht länger empfindlich auf die von dem Rundballen auf das Hüllmaterial ausgeübte Zug- bzw. Zuführkraft eingeregelt werden, um eine hinreichende Spannung des Hüllmaterials einerseits zu erzielen andererseits zu verhindern, dass das Hüllmaterial während des Ummantelns reißt. Der Ballenpressvorgang kann somit insgesamt effizient und ökonomisch durchgeführt werden.

Gemäß einer vorteilhaften Weiterbildung der Erfindung ist vorgesehen, dass eine erste Spannrolle der zwei Spannrollen, welche das Hüllmaterial während des Ummantelns in Flussrichtung des Hüllmaterials von der Vorratsrolle hin zum Rundballen zuerst passiert, während des Ummantelns eine geringere Umfangsgeschwindigkeit aufweist als eine zweite Spannrolle der zwei Spannrollen, welche das Hüllmaterial während des Ummantelns in Flussrichtung des Hüllmaterials von der Vorratsrolle hin zum Rundballen anschließend passiert.

Vorzugsweise ist vorgesehen, dass die Umfangsgeschwindigkeit der ersten Spannrolle in einem Bereich zwischen 60% und 80% der Umfangsgeschwindigkeit der zweiten Spannrolle liegt.

Aufgrund der relativen Umfangsgeschwindigkeit, insbesondere dadurch, dass die erste Spannrolle anteilig langsamer läuft als die zweite Spannrolle, und bedingt durch den Kontakt zwischen Hüllmaterial und den Oberflächen der Spannrollen, welche von dem Hüllmaterial während des Ummantelns des Rundballens bereichs- bzw. abschnittsweise kontaktiert bzw. umschlungen werden, bildet sich zwischen den beiden Spannrollen eine erste Spannzone aus, in welcher das Hüllmaterial bei gleichzeitiger Förderwirkung gespannt wird bzw. eine Spannung in das Hüllmaterial induziert wird.

Gemäß einer vorteilhaften Weiterbildung der Erfindung ist vorgesehen, dass die Spannvorrichtung einen Motor umfasst, welcher mit einer der zwei Spannrollen zum Antrieb derselben gekoppelt ist, wobei die zwei Spannrollen mittels eines Übersetzungsgetriebes trieblich miteinander verbunden sind.

Vorzugsweise ist vorgesehen, dass das Übersetzungsgetriebe als Stirnradgetriebe mit einem festen Übersetzungsverhältnis, insbesondere als Stirnradstufe, ausgebildet ist.

Alternativ ist vorgesehen, dass das Übersetzungsgetriebe als stufenloses Übersetzungsgetriebe mit einem veränderlichen Übersetzungsverhältnis, insbesondere als Riemengetriebe, ausgebildet ist.

Als Alternative zu einer Ausgestaltung mit einem Motor und einem Übersetzungsgetriebe kann gemäß einer vorteilhaften Weiterbildung der Erfindung vorgesehen sein, dass die Spannvorrichtung zwei Motoren umfasst, wobei jeweils ein Motor mit jeweils einer der zwei Spannrollen zum Antrieb derselben gekoppelt ist.

Durch die Nutzung eines mit der Spannvorrichtung trieblich gekoppelten Motors unter Zwischenschaltung eines Übersetzungsgetriebes, wahlweise mit festem oder variablem Übersetzungsverhältnis, oder durch die Nutzung von zwei Motoren kann die jeweilige Umfangsgeschwindigkeit der Spannrollen durch den/die Motor(en) aktiv beeinflusst bzw. eingestellt werden. Hierdurch kann eine für den jeweiligen Anwendungsfall unter Berücksichtigung der während des Ballenpressvorgangs jeweils örtlich vorherrschenden Bedingungen und den vom Bediener vorgegebenen Zielsetzungen für den Ballenpressvorgang bzw. die zu pressenden und zu ummantelnden Rundballen optimale Spannung in das Hüllmaterial induziert werden.

Vorzugsweise ist vorgesehen, dass der Motor als hydraulischer Motor ausgebildet ist, wobei der hydraulische Motor mit einer Arbeitshydraulik der Rundballenpresse strömungstechnisch verbunden ist, wobei die Arbeitshydraulik der Rundballenpresse ein zwischen einer Sperrstellung und einer Offenstellung zur Versorgung des hydraulischen Motors schaltbares, vorzugsweise elektrisch schaltbares, Ventil umfasst.

Die Ausgestaltung des Motors oder der Motoren als hydraulische(r) Motor(en) erlaubt eine besonders einfache und kostengünstige Implementierung der aktiven Spannvorrichtung. Da die Rundballenpresse stets eine Arbeitshydraulik bzw. einen Arbeitshydraulikkreislauf umfasst, kann die erfindungsgemäße Funktion besonders einfach in die bestehende Systemarchitektur der Rundballenpresse integriert werden. Lediglich ein schaltbares Ventil und ein oder zwei hydraulische Motoren müssen in die vorhandene Arbeitshydraulik integriert bzw. mit dieser gekoppelt werden, um den aktiven Antrieb der Spannrollen und somit die präzise Regelung der Spannung des Hüllmaterials umzusetzen. Die Arbeitshydraulik bzw. der Arbeitshydraulikkreislauf der Rundballenpresse wird im Betrieb über die an der landwirtschaftlichen Arbeitsmaschine, die gemeinsam mit der Rundballenpresse das Gespann zur Durchführung des Ballenpressvorgangs bildet, ausgebildete hydraulische Schnittstelle, insbesondere über die sogenannten "Power Beyond"-Hydraulikanschlüsse, mit der Arbeitshydraulik bzw. dem Arbeitshydraulikkreislauf der landwirtschaftlichen Arbeitsmaschine gekoppelt und von dieser bedarfsgerecht versorgt, um die Funktion des aktiven Antriebs der Spannvorrichtung gemäß dem gewünschten im Hüllmaterial zu erzielenden Spannungsverhältnis zu realisieren.

Gemäß einer vorteilhaften Weiterbildung der Erfindung ist vorgesehen, dass der Einrichtung zum Ummanteln eine Steuereinrichtung zugeordnet ist, welche dazu vorgesehen und eingerichtet ist, Betriebsparameter der Rundballenpresse und/oder Parameter, die auf Bedienereingaben basieren, zu empfangen, zur Erzeugung von Einstellparameter für die Einrichtung zum Ummanteln zu verarbeiten und die erzeugten Einstellparameter an der Einrichtung zum Ummanteln durch Ansteuerung einzustellen.

Die Steuereinrichtung ist in der Lage verschiedenste Parameter, welche den Betrieb der Rundballenpresse bzw. des Gespanns aus landwirtschaftlicher Arbeitsmaschine und Rundballenpresse charakterisieren bzw. bestimmen, zu empfangen und zu Einstellparametern für die Einrichtung zum Ummanteln und somit zum Einstellen der Spannung des Hüllmaterials zu verarbeiten. Hierdurch wird eine sehr genaue Einstellung der Spannung des Hüllmaterials und somit eine möglichst effiziente Nutzung des Hüllmaterials möglich, welche den während des Ballenpressvorgangs jeweils örtlich vorherrschenden Randbedingungen und den vom Bediener vorgegebenen Randbedingungen bzw. Zielsetzungen für den Ballenpressvorgang bzw. die zu pressenden und zu ummantelnden Rundballen Rechnung trägt.

Vorzugsweise ist vorgesehen, dass die Steuereinrichtung mit einer Anzeige- und Eingabeeinrichtung in datenübertragender Weise verbunden ist, welche dazu vorgesehen und eingerichtet ist, Bedienereingaben anzunehmen sowie Betriebsparameter der Rundballenpresse, Parameter, die auf Bedienereingaben basieren, und/oder Einstellparameter für die Einrichtung zum Ummanteln anzuzeigen.

Die datenübertragende Verbindung einer Anzeige- und Eingabeeinrichtung mit der Steuereinrichtung erlaubt nicht nur einerseits, dass ein Bediener des Gespanns direkt Einfluss auf den Betrieb des Gespanns bzw. die einzelnen Maschinen, also Rundballenpresse und landwirtschaftliche Arbeitsmaschine, nehmen kann, sondern auch andererseits, dass der gesamte Betrieb des Gespanns, insbesondere allerdings der Ummantelvorgang mit Hüllmaterial, transparent abläuft. Ein Bediener wird über die Anzeige- und Eingabeeinrichtung stets über die wesentlichen den Betrieb der Rundballenpresse bzw. des Gespanns charakterisierenden Parameter und Kenngrößen informiert und kann somit Einfluss auf den weiteren Prozess nehmen bzw. den von ihm geplanten Prozess im Hinblick auf Qualitäts-, Quantitäts- und Effizienzaspekte bewerten.

Weiter vorzugsweise ist vorgesehen, dass die Rundballenpresse eine der Spannvorrichtung zugeordnete Sensoreinrichtung umfasst, welche dazu vorgesehen und eingerichtet ist, die Umfangsgeschwindigkeit der ersten Spannrolle und/oder der zweiten Spannrolle zu erfassen und ein die entsprechende Umfangsgeschwindigkeit repräsentierendes Signal zur Weiterverarbeitung der Steuereinrichtung bereitzustellen.

Die Verwendung einer Sensoreinrichtung erlaubt es, den Spannvorgang des Hüllmaterials kontinuierlich zu überwachen und somit sicherzustellen, dass die gewünschte und notwendige Spannung auch während des Ummantelns kontinuierlich entsprechend der vorgegebenen und vorherrschenden Randbedingungen in das Hüllmaterials eingeprägt wird.

Gemäß einer vorteilhaften Weiterbildung der Erfindung ist vorgesehen, dass die Einrichtung zum Ummanteln der Presskammer vorgeschaltet ist.

Vorzugsweise ist vorgesehen, dass die Einrichtung zum Ummanteln eine antreibbare Zuführrolle zum Zuführen des Hüllmaterials in die Presskammer umfasst, wobei die Zuführrolle und die zweite Spannrolle der Spannvorrichtung mit gleicher oder relativer Umfangsgeschwindigkeit zueinander in gegensinnige Drehrichtungen antreibbar sind.

Weiter vorzugsweise ist vorgesehen, dass die Rundballenpresse eine der Zuführrolle oder der Presskammer zugeordnete Sensoreinrichtung umfasst, die dazu vorgesehen und eingerichtet ist, die Umfangsgeschwindigkeit der Zuführrolle mittelbar oder unmittelbar zu erfassen und ein die Umfangsgeschwindigkeit repräsentierendes Signal der Steuereinrichtung zur Weiterverarbeitung bereitzustellen.

Gemäß einer vorteilhaften Weiterbildung der Erfindung ist vorgesehen, dass die Einrichtung zum Ummanteln der Presskammer nachgeschaltet ist.

Vorzugsweise ist vorgesehen, dass die Einrichtung zum Ummanteln einen Wickeltisch mit Mitteln zum Antreiben eines auf dem Wickeltisch befindlichen Rundballens umfasst, wobei der Rundballen und die zweite Spannrolle mit gleicher oder relativer Umfangsgeschwindigkeit zueinander in gegensinnige Drehrichtungen antreibbar sind.

Durch die Anordnung der erfindungsgemäßen Einrichtung zum Ummanteln eines Rundballens mit Hüllmaterial wahlweise der Presskammer vorgeschaltet oder der Presskammer nachgeschaltet ergibt sich die Möglichkeit die erfindungsgemäßen Vorteile sowohl beim Ummanteln eines gepressten Rundballens direkt in der Presskammer und/oder auch beim Ummanteln außerhalb der Presskammer auf einem Wickeltisch zu nutzen.

Der Betrieb der Zuführrolle, des Rundballens oder der Mittel zum Antreiben eines Rundballens auf dem Wickeltisch wahlweise mit einer gleichen oder relativen Umfangsgeschwindigkeit und gegensinniger Drehrichtung zur zweiten Spannrolle der Spannvorrichtung schafft die Möglichkeit die Spannung in das Hüllmaterial, je nach Wunsch, in nur einer Spannzone, welche zwischen den zwei Spannrollen der Spannvorrichtung ausgebildet wird, oder summiert in zwei Spannzonen, eine hiervon ausgebildet zwischen den zwei Spannrollen der Spannvorrichtung die andere zwischen der zweiten Spannrolle der Spannvorrichtung und, je nach Anordnung der Einrichtung zum Ummanteln, der Zuführrolle bzw. den Mitteln zum Antreiben eines Rundballens auf einem Wickeltisch bzw. des Rundballens selbst, zu induzieren. Bei der Schaffung von zwei Spannzonen kann das Hüllmaterial noch schonender gespannt werden, da die insgesamt benötigte Spannung während der Förderung in Förderrichtung von der Vorratsrolle hin zum Rundballen zu zwei verschiedenen Zeitpunkten nacheinander, also schrittweise, in das Hüllmaterial eingebracht wird.

Weiter vorzugsweise ist vorgesehen, dass die Rundballenpresse eine dem Wickeltisch zugeordnete Sensoreinrichtung umfasst, die dazu vorgesehen und eingerichtet ist, die Umfangsgeschwindigkeit des Rundballens mittelbar oder unmittelbar zu erfassen und ein die Umfangsgeschwindigkeit repräsentierendes Signal der Steuereinrichtung zur Weiterverarbeitung bereitzustellen.

Hierdurch lassen sich dieselben Vorteile erzielen, wie bei der Verwendung einer der Spannvorrichtung zugeordneten Sensoreinrichtung, lediglich mit dem Fokus auf der Schaffung einer zweiten Spannzone.

Gemäß einer vorteilhaften Weiterbildung der Erfindung ist vorgesehen, dass eine Umfangsfläche zumindest einer der zwei Spannrollen zumindest bereichsweise mit einer Profilierung und/oder Beschichtung versehen ist.

Vorzugsweise ist vorgesehen, dass eine Umfangsfläche jeder der zwei Spannrollen zumindest bereichsweise mit einer Profilierung und/oder Beschichtung versehen ist.

Die Profilierung und/oder Beschichtung der Oberfläche(n) der Spannrolle(n) sorgt dafür, dass der Reibschluss zwischen Hüllmaterial und Oberfläche(n) der Spannrolle(n) erhöht bzw. verbessert wird. Hierdurch kann die Kraftübertragung zwischen den Spannrollen und dem Hüllmaterial insgesamt verbessert werden, wodurch wiederum die Spannung prozesssicherer in das Hüllmaterial eingeprägt werden kann.

Die erfindungsgemäße Aufgabe wird ferner durch ein Verfahren gemäß dem unabhängigen Patentanspruch 15 gelöst.

Die Merkmale der auf die landwirtschaftliche Rundballenpresse gemäß dem unabhängigen Patentanspruch 1 bezogenen abhängigen Patentansprüche 2 bis 14 sind gleichermaßen auf das erfindungsgemäße Verfahren gemäß dem unabhängigen Patentanspruch 15 übertragbar.

Die vorliegende Erfindung wird nachstehend anhand der in den Figuren abgebildeten Ausführungsformen näher beschrieben.

Es zeigen:
- FIG. 1A:: eine schematische und exemplarische Ansicht einer ersten Ausführungsform einer erfindungsgemäßen landwirtschaftlichen Rundballenpresse;
- FIG. 1B:: eine schematische und exemplarische Ansicht einer zweiten Ausführungsform einer erfindungsgemäßen landwirtschaftlichen Rundballenpresse;
- FIG. 2:: eine schematische und exemplarische Ansicht der ersten Ausführungsform der erfindungsgemäßen landwirtschaftlichen Rundballenpresse gemäß FIG. 1A mit einer erfindungsgemäßen, der Presskammer der Rundballenpresse vorgeschalteten Einrichtung zum Ummanteln eines gebildeten Rundballens; und
- FIG. 3:: eine schematische und exemplarische Darstellung eines Hydraulikschaltplans zur Ansteuerung einer Spannvorrichtung der erfindungsgemäßen Einrichtung zum Ummanteln eines gebildeten Rundballens gemäß FIG. 2.

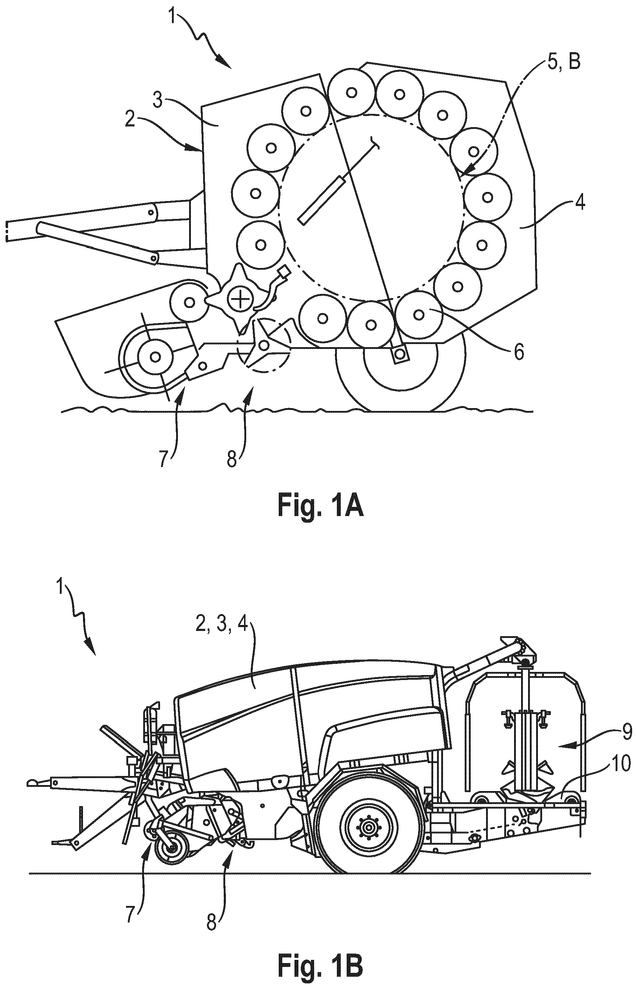

Die FIGs. 1A und 1B zeigen eine schematische und exemplarische Darstellung einer ersten und einer zweiten Ausführungsform einer erfindungsgemäßen landwirtschaftlichen Rundballenpresse 1. Die Rundballenpressen 1 umfassen jeweils ein Pressengehäuse 2, das wiederum ein feststehendes Gehäuseteil 3 und eine relativ zu dem feststehenden Gehäuseteil 3 schwenkbare Auswurfklappe 4 - die in FIG. 1B jedoch nicht dargestellt ist - umfasst. Die Auswurfklappe 4 ist zwischen einer Schließstellung und einer Öffnungsstellung relativ zum feststehenden Gehäuseteil 3 schwenkbar, wobei eine Bewegung der Auswurfklappe 4 zwischen der Schließstellung und der Öffnungsstellung zum Öffnen oder Schließen einer in dem Pressengehäuse 2 ausgebildeten Presskammer 5 führt.

Das Pressengehäuse 2, insbesondere das feststehende Gehäuseteil 3, ist auf einem Fahrgestell angeordnet und mit diesem verbunden, über das die Rundballenpresse 1 mit einer - in den FIGs. nicht dargestellten, sondern nur angedeuteten - landwirtschaftlichen Arbeits- bzw. Zugmaschine, insbesondere in Gestalt eines Traktors, gekoppelt werden kann, so dass die landwirtschaftliche Arbeitsmaschine die Rundballenpresse 1 im Betrieb auf einer landwirtschaftlichen Fläche bewegt. Zur Kopplung der Arbeitsmaschine und der Rundballenpresse 1 umfasst die Arbeitsmaschine heckseitig eine mechanische Schnittstelle und eine hydraulische Schnittstelle.

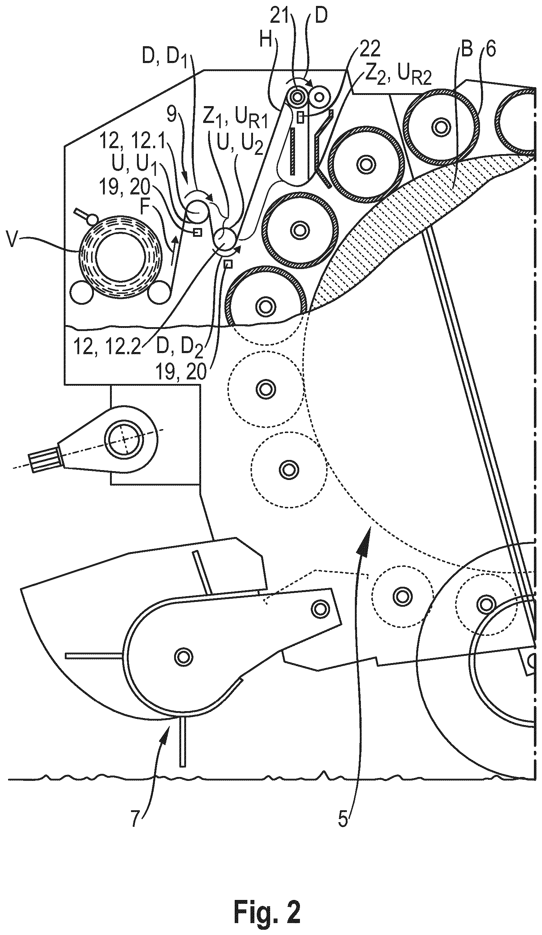

Die in dem Pressengehäuse 2 ausgebildete Presskammer 5 wird von einem Pressmittel 6 umfangsseitig begrenzt. Das Pressmittel 6 kann in Form von Pressriemen ausgebildet sein oder aber von einer Vielzahl von voneinander beabstandet angeordneten Pressrollen, wie in FIG. 1A bzw. 2 dargestellt, gebildet werden. Während des Betriebs der Rundballenpressen 1 wird mithilfe einer Einrichtung 7 zum Aufnehmen von Erntegut das Erntegut von der landwirtschaftlichen Fläche aufgenommen und mittels einer Einrichtung 8 zum Fördern von Erntegut in die Presskammer 5 gefördert, wobei mittels des Pressmittels 6 aus dem aufgenommenen Erntegut ein Rundballen B geformt bzw. gebildet wird. Die Einrichtung 7 zum Aufnehmen umfasst dabei zumindest eine sogenannte Pick-Up, mit deren Hilfe das Erntegut von der landwirtschaftlichen Fläche aufgenommen wird, die Einrichtung 8 zum Fördern einen Rotor, mit dessen Hilfe das aufgenommene Erntegut der Presskammer 5 zugeführt bzw. in die Presskammer 5 gefördert wird.

Die Rundballenpresse 1 sowohl gemäß der ersten Ausführungsform als auch gemäß der zweiten Ausführungsform umfasst jeweils zumindest eine Einrichtung 9 zum Ummanteln eines gepressten Rundballens B mit einem elastischen, bahnförmigen Hüllmaterial H, welches mittels einer Vorratsrolle V bereitgestellt wird. Das Hüllmaterial H wird während des Ummantelns eines Rundballens B ausgehend von der vorratsrolle V hin zum Rundballen B in eine Förderrichtung F, wie in FIG. 2 dargestellt, bewegt. Zur Führung and Applikation des Hüllmaterials H können grundsätzlich verschiedene, nicht näher beschriebene, bekannte Mittel, beispielsweise Rollen oder dergleichen, vorgesehen sein.

Die Einrichtung 9 zum Ummanteln kann - wie insbesondere in FIG. 2 dargestellt - innerhalb der Rundballenpresse 1 bzw. des Pressengehäuses 2, insbesondere im feststehenden Gehäuseteil 3, der Presskammer 5 vorgeschaltet angeordnet und dazu eingerichtet sein, einen fertig gepressten Rundballen B in der Presskammer 5 mit dem Hüllmaterial H, welches wahlweise als Netz oder als Film bzw. Folie ausgeführt ist, zu ummanteln. Die Einrichtung 9 zum Ummanteln kann genauso jedoch - wie insbesondere in FIG. 1A dargestellt - außerhalb des Pressengehäuses 2 der Presskammer 5 nachgeschaltet angeordnet und dazu eingerichtet sein, einen Rundballen B nach Verlassen der Presskammer 5 mit Hüllmaterial H, welches sodann als Film bzw. Folie ausgeführt ist, zu ummanteln. Eine solche Einrichtung 9 zum Ummanteln ist insbesondere in einem Bereich der Rundballenpresse 1 ausgebildet bzw. angeordnet, der sich hinter der Auswurfklappe 4 befindet. Eine solche dann auch als Wickelvorrichtung bezeichnete Einrichtung 9 zum Ummanteln umfasst einen Wickeltisch 10, auf dem der Rundballen B nach Verlassen der Presskammer 5 kontinuierlich um seine Rotationsachse, eine durch die Mittelpunkte der Stirnflächen des Rundballens verlaufende Symmetrieachse, über - in FIG. 1B nicht dargestellte - Mittel zum Antreiben gedreht werden kann, um diesen mit dem Film bzw. der Folie zu ummanteln. Bei einer Rundballenpresse 1 gemäß der zweiten Ausführungsform ist auch eine Kombination von einer der Presskammer 5 vorgeschalteten und einer der Presskammer 5 nachgeschalteten Einrichtung 9 zum Ummanteln möglich. Sofern dies der Fall ist, wird der Rundballen B in der Presskammer 5 lediglich mit einem Hüllmaterial H in Form eines Netzes ummantelt.

Erfindungsgemäß ist nunmehr vorgesehen, dass die Einrichtung 9 zum Ummanteln eines gepressten Rundballens B eine Spannvorrichtung 11 zum Spannen des Hüllmaterials H während eines Ummantelns des gepressten Rundballens B umfasst. Wie eingangs geschildert ist das Spannen des Hüllmaterials H während des Ummantelns eines gepressten Rundballens B elementar, um einerseits die gewünschte Pressdichte und Form des Rundballens B nach Verlassen der Presskammer 5 beizubehalten und andererseits einen möglichst ökonomischen Verbrauch an Hüllmaterial H zu erzielen. Die Spannvorrichtung 11 umfasst hierzu zwei drehbewegliche Spannrollen 12. Um die Drehbeweglichkeit der Spannrollen 12 zu realisieren, können diese beispielsweise direkt am Pressengehäuse 2, insbesondere am feststehenden Gehäuseteil 3, oder an einer Rahmenstruktur, welche mit dem Pressengehäuse 2 gekoppelt ist, gelagert sein. Die Spannrollen 12 sind so positioniert bzw. angeordnet, dass das Hüllmaterial H ausgehend von der Vorratsrolle V hin zum gepressten Rundballen B zwischen den Spannrollen 12 geführt wird. Um die Spannung im Hüllmaterial H während des Ummantelns zu erzielen, sind die beiden Spannrollen 12 aktiv antreibbar. Die Spannrollen 12 werden somit gerade nicht durch die Bewegung des Hüllmaterials H und den Kontakt zwischen Hüllmaterial H und Oberfläche der Spannrollen 12 angetrieben und müssen zum Erzeugen einer Spannung abgebremst werden. Vielmehr bedeutet aktiv antreibbar, dass die Spannrollen 12 im Betrieb kontrolliert, nicht jedoch durch die Bewegung und Geschwindigkeit des Hüllmaterials H, über eine Einrichtung angetrieben werden, sodass diese sich mit einer gewünschten, einstellbaren Umfangsgeschwindigkeit U bewegen.

Erfindungsgemäß werden die beiden Spannrollen 12 dabei derart angetrieben, dass sich die Spannrollen 12 mit einer relativen Umfangsgeschwindigkeit U_{R1} zueinander in gegensinnige Drehrichtungen D bewegen. Mit anderen Worten, der aktive Antrieb der Spannrollen 12 erfolgt derart, dass eine der Spannrollen 12 langsamer, also mit einer geringeren Umfangsgeschwindigkeit U, läuft als die andere der beiden Spannrollen 12, welche demnach schneller, also mit einer höheren Umfangsgeschwindigkeit U, läuft. Aufgrund der relativen Umfangsgeschwindigkeit U_{R1} und dem Kontakt zwischen Hüllmaterial H und den Oberflächen der Spannrollen 12, welche von dem Hüllmaterial H während des Ummantelns bereichsweise kontaktiert bzw. umschlungen werden, bildet sich zwischen den beiden Spannrollen 12 eine erste Spannzone Z₁ aus, in welcher das Hüllmaterial H gespannt wird bzw. eine Spannung in das Hüllmaterial H induziert wird. Damit die Kraftübertragung zwischen den Spannrollen 12 und dem Hüllmaterial H zwecks Spannung des Hüllmaterials H verbessert wird, kann vorgesehen sein, dass die Umfangsfläche zumindest einer der zwei Spannrollen 12, vorzugsweise beider Spannrollen 12, zumindest bereichsweise, vorzugsweise vollständig, mit einer Profilierung und/oder einer Beschichtung versehen ist. Hierdurch ist es möglich den Reibschluss zwischen Hüllmaterial H und Oberfläche der Spannrollen 12 zu erhöhen, wodurch der Spannvorgang optimiert wird.

Die Spannrollen 12 können in Bezug auf die Flussrichtung F des Hüllmaterials H in eine erste Spannrolle 12.1 und eine zweite Spannrolle 12.2 unterteilt werden. Die erste Spannrolle 12.1 ist dabei die Spannrolle 12, welche das Hüllmaterial H während des Ummantelns in Flussrichtung F von der Vorratsrolle V hin zum Rundballen B zuerst passiert. Die zweite Spannrolle 12.2 ist dabei die Spannrolle 12, welche das Hüllmaterial H während des Ummantelns in Flussrichtung F von der Vorratsrolle V hin zum Rundballenpresse B anschließend passiert. Mit anderen Worten, wird das Hüllmaterial H von der Vorratsrolle V abgezogen, passiert es zunächst in Flussrichtung F die erste Spannrolle 12.1 und anschließend die zweite Spannrolle 12.2 bevor es auf den Rundballen B appliziert wird. Bevorzugt wird die erste Spannrolle 12.1 während des Ummantelns mit einer geringeren Umfangsgeschwindigkeit U₁ als die zweite Spannrolle 12.2 in eine erste Drehrichtung D₁ bewegt, rotiert somit langsamer, als die zweite Spannrolle 12.2, welche mit einer zweiten Umfangsgeschwindigkeit U₂ in eine zweite gegensinnige Drehrichtung D₂ bewegt wird. Die Umfangsgeschwindigkeit U₁ der ersten Spannrolle 12.1 beträgt dabei vorzugsweise 60% bis 80% bzw. liegt dabei vorzugsweise in einem Bereich zwischen 60% und 80% der Umfangsgeschwindigkeit U₂ der zweiten Spannrolle 12.2.

Der aktive Antrieb der zwei drehbeweglichen Spannrollen 12, 12.1, 12.2 der Spannvorrichtung 11 kann dabei auf verschiedene Art und Weise erfolgen. Vorzugsweise umfasst die Spannvorrichtung 11 einen Motor 13, welcher mit einer der zwei Spannrollen 12, 12.1, 12.2 zum Antrieb derselben gekoppelt ist. Zum Antrieb derselben gekoppelt bedeutet in diesem Zusammenhang, dass beispielsweise der Motor 13 eine Ausgangswelle umfasst, welche mit einer Welle einer der Spannrollen 12, 12.1, 12.2 zur Übertragung von Drehzahl und Drehmoment verbunden ist, oder aber die Welle einer der Spannrollen 12, 12.1, 12.2 in eine im Motor 13 ausgebildete Ausnehmung zur Übertragung von Drehzahl und Drehmoment aufgenommen ist. Bei der Ausgestaltung der Spannvorrichtung 11 mit einem Motor 13 sind die zwei Spannrollen 12, 12.1, 12.2 mittels eines Übersetzungsgetriebes 14 trieblich miteinander verbunden. Durch das Übersetzungsgetriebe 14 wird es somit möglich, die unterschiedlichen Umfangsgeschwindigkeiten U₁, U₂ der zwei Spannrollen 12, 12.1, 12.2 und somit die relative Umfangsgeschwindigkeit U_{R1} zwischen den zwei Spannrollen 12, 12.1, 12.2 zur Spannung des Hüllmaterials H zu erzielen. Je nachdem, ob die Umfangsgeschwindigkeiten U₁, U₂ stets in einem gleichen Verhältnis zueinanderstehen sollen oder das Verhältnis veränderlich sein soll, kann das Übersetzungsgetriebe wahlweise als Stirnradgetriebe mit einem festen Übersetzungsverhältnis, vorzugsweise als Stirnradstufe, oder als stufenlos Übersetzungsgetriebe mit einem veränderlichen Übersetzungsverhältnis, insbesondere als Riemengetriebe, ausgebildet sein.

Bei einer alternativen - in den FIGs. nicht dargestellten - Ausführungsform der Einrichtung 9 zum Ummanteln umfasst die Spannvorrichtung 11 nicht nur lediglich einen Motor 13, sondern zwei Motoren 13. Durch die Nutzung eines zweiten Motors 13 kann das Übersetzungsgetriebe, welches die beiden Spannrollen 12, 12.1, 12.2 trieblich miteinander verbindet, entfallen. Vielmehr wird jeweils ein Motor 13 mit jeweils einer der Spannrollen 12, 12.1, 12.2 zum Antrieb derselben gekoppelt bzw. verbunden, wodurch es möglich wird, auch ohne Übersetzungsgetriebe, Einfluss auf das Verhältnis der Umfangsgeschwindigkeiten U₁, U₂ der zwei Spannrollen 12, 12.1, 12.2 zu nehmen.

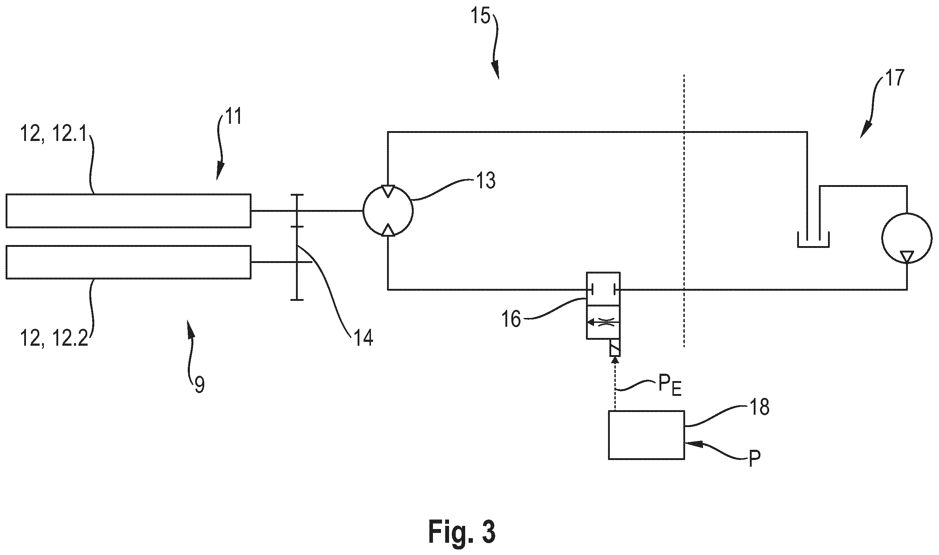

In einer bevorzugten, in FIG. 3 dargestellten Ausführungsform der Einrichtung 9 zum Umwandeln ist der Motor 13 bzw., sofern zwei Motoren 13 zum aktiven Antrieb der Spannrollen 12 genutzt werden, die Motoren 13 als hydraulischer Motor(en) ausgebildet. Der hydraulische Motor ist hierbei mit einer Arbeitshydraulik 15 bzw. einem Arbeitshydraulikkreislauf 15 der Rundballenpresse 1 strömungstechnisch verbunden bzw. Teil der Arbeitshydraulik 15. Zum Versorgen des hydraulischen Motors mit dem in der Arbeitshydraulik 15 befindlichen hydraulischen Medium bzw. hydraulische Flüssigkeit zwecks Antrieb desselben und somit Aktivierung und Antrieb der Spannvorrichtung 11 bzw. der Spannrollen 12, 12.1, 12.2 umfasst die Arbeitshydraulik 15 der Rundballenpresse 1 ein Ventil 16. Dieses Ventil 16 ist zwischen einer Sperrstellung und einer Offenstellung schaltbar. In der Sperrstellung des Ventils 16 wird das hydraulische Medium daran gehindert den hydraulischen Motor zu versorgen, sodass der hydraulische Motor die zwei Spannrollen 12, 12.1, 12.2 der Spannvorrichtung 11 nicht antreibt. Wird das Ventil 16 hingegen in die Offenstellung geschaltet, kann das hydraulische Medium den hydraulischen Motor versorgen, sodass dieser zwei Spannrollen 12, 12.1, 12.2 der Spannvorrichtung 11 antreibt und somit das Hüllmaterial H gespannt wird. Das Ventil 16 ist vorzugsweise elektrisch schaltbaren, d. h. der Schaltvorgang des Ventils 16 wird durch ein elektrisches Signal ausgelöst. Im Betrieb der Rundballenpresse 1 ist, wie eingangs angedeutet, diese mit einer landwirtschaftlichen Arbeitsmaschine gekoppelt, welche die Rundballenpresse 1 über die landwirtschaftliche Fläche bewegt. Die landwirtschaftliche Arbeitsmaschine umfasst heckseitig die hydraulische Schnittstelle, welche es erlaubt die Rundballenpresse 1 hydraulisch mit der landwirtschaftlichen Arbeitsmaschine zu koppeln, wodurch die Arbeitshydraulik 15 der Rundballenpresse 1 von einer Arbeitshydraulik 17 der landwirtschaftlichen Arbeitsmaschine versorgt werden kann.

Wenngleich die Ausgestaltung des Motors 13 als hydraulischer Motor, welcher mit der Arbeitshydraulik 15 der Rundballenpresse 1 wirkverbunden ist, die bevorzugte Ausgestaltung darstellt, kann der Motor 13 bzw., sofern zwei Motoren 13 zum aktiven Antrieb der Spannrollen 12, 12.1, 12.2 genutzt werden, die Motoren 13 gleichermaßen als Elektromotor(en) ausgebildet sein, welcher von einem Energiespeicher oder einem Generator mit Energie versorgt wird.

Neben den bereits genannten Vorrichtungen und Komponenten kann der Einrichtung 9 zum Ummanteln weiterhin eine Steuereinrichtung 18 zugeordnet sein. Die Steuereinrichtung 18 kann Teil der Rundballenpresse 1 oder aber auch Teil der landwirtschaftlichen Arbeitsmaschine sein, welche die Rundballenpresse 1 im Betrieb über die landwirtschaftliche Fläche bewegt. Genauso kann es auch sein, dass sowohl die Rundballenpresse 1 als auch die landwirtschaftliche Arbeitsmaschine jeweils Steuereinrichtungen umfassen, die gemeinschaftlich die Steuereinrichtung 18 bilden. Die Steuereinrichtung 18 ist dazu vorgesehen und eingerichtet ist, verschiedene Parameter P, die für den Betrieb der Rundballenpresse 1 und/oder der landwirtschaftlichen Arbeitsmaschine relevant sind, bzw. entsprechende die Parameter P repräsentierende Signale zu empfangen. Wesentlich ist der Empfang einerseits von Betriebsparameter der Rundballenpresse 1, beispielsweise Geschwindigkeiten, Drücke, wirkende Kräfte und/oder Drehmomente, oder dergleichen, andererseits der Empfang von Parametern, die auf Bedienereingaben basieren, beispielsweise Pressdichte, Ballenumfang, oder dergleichen. Die Steuereinrichtung 18 erlaubt zur Erzeugung von Einstellparameter P_{E} für die Einrichtung 9 zum Ummanteln diese Parameter, insbesondere die Betriebsparameter und die auf Bedienereingaben basierenden Parameter, zu verarbeiten und die erzeugten Einstellparameter P_{E} an der Einrichtung 9 zum Ummanteln durch Ansteuerung einzustellen. Mittels der Steuereinrichtung 18 kann beispielsweise über die Erzeugung eines Einstellparameters P_{E} die Ansteuerung des Ventils 16 der Arbeitshydraulik 15 der Rundballenpresse 1 zur Schaltung zwischen Schließstellung und Offenstellung des Ventils 16 zwecks Aktivierung und Antrieb bzw. Deaktivierung der Spannvorrichtung 11 realisiert werden. Für die Bereitstellung der verschiedene Parameter P, insbesondere der Betriebsparameter, kann die Rundballenpresse 1 eine Vielzahl an Sensoren bzw. Sensoreinrichtung umfassen. Eine für den Betrieb der Einrichtung 9 zum Ummanteln vorteilhafte Ausgestaltung der Rundballenpresse 1 sieht dabei vor, dass der Spannvorrichtung 11 eine Sensoreinrichtung 19 zugeordnet ist. Die Sensoreinrichtung 19 ist dazu vorgesehen und eingerichtet, die Umfangsgeschwindigkeit U, U₁, U₂ der ersten Spannrolle 12.1 und/oder der zweiten Spannrolle 12.2 zu erfassen und ein die entsprechende Umfangsgeschwindigkeit U, U₁, U₂ repräsentierendes Signal zur Weiterverarbeitung der Steuereinrichtung 18 bereitzustellen bzw. an die Steuereinrichtung 18 zu übermitteln. Je nachdem, ob nur eine oder beide der Umfangsgeschwindigkeiten U, U₁, U₂ sensorisch erfasst werden sollen umfasst die Sensoreinrichtung 19 einen Sensor 20 oder zwei Sensoren 20, die entsprechend angeordnet bzw. positioniert sind, sodass sie die entsprechende Umfangsgeschwindigkeit U, U₁, U₂ erfassen können.

Die Steuereinrichtung 18 kann weiterhin mit einer - in den FIGs. nicht dargestellten - Anzeige- und Eingabeeinrichtung in datenübertragender Weise verbunden sein. Die Anzeige- und Eingabeeinrichtung ist dazu vorgesehen und eingerichtet ist, Bedienereingaben anzunehmen sowie Betriebsparameter der Rundballenpresse, Parameter, die auf Bedienereingaben basieren, und/oder Einstellparameter für die Einrichtung 9 zum Ummanteln einem Bediener der Rundballenpresse 1 bzw. des Gespanns aus Rundballenpresse 1 und landwirtschaftlicher Arbeitsmaschine anzuzeigen, sodass der Bediener stets im Bilde über die im Betrieb vorgenommenen Einstellungen an der Rundballenpresse 1, insbesondere über solche Einstellungen und/oder Parameter, welche die Einrichtung 9 zum Ummanteln, vorzugsweise die Spannung des Hüllmaterials H, betreffen. Beispielsweise kann der Bediener den Vorgang zum Ummanteln des Rundballens B mit der Einrichtung 9 zum Ummanteln durch einen über die Anzeige- und Eingabeeinheit eingegebenen Befehl auslösen. Ergänzend oder alternativ hierzu kann der Vorgang zum Ummanteln des Rundballens B mit der Einrichtung 9 zum Ummanteln allerdings auch automatisch ausgelöst werden, beispielsweise über sensorisch erfasste Parameter der Ballenpresse, wie Kupplungsparameter, Positionsparameter von Komponenten, wie der Auswurfklappe, oder Geschwindigkeitsparametern von Komponenten, wie dem Pressmittel, oder Druckparametern. Die Anzeige- und Eingabeeinrichtung kann Teil der Rundballenpresse 1, der landwirtschaftlichen Arbeitsmaschine und/oder eines externen Geräts, beispielsweise eines Tablets, Smartphones oder dergleichen sein.

Neben der Möglichkeit die Spannung des Hüllmaterials H lediglich ausschließlich über die Spannvorrichtung 11 einzustellen, kann es eine weitere Möglichkeit geben die Spannung zu des Hüllmaterials H zu verändern. Diese Möglichkeit ist abhängig von der Geschwindigkeit, mit welcher der Rundballen B in der Presskammer 5 oder auf dem Wickeltisch 10 bewegt wird. Bei einer der Presskammer 5 vorgeschalteten Einrichtung 9 zum Ummanteln umfasst die Einrichtung 9 eine antreibbare Zuführrolle 21, welche dazu vorgesehen und eingerichtet ist, dass Hüllmaterial H der Presskammer 5 zum Ummanteln des darin befindlichen Rundballens B zuzuführen. Die Zuführrolle 21 kann beispielsweise über einen Riementrieb mit dem Pressmittel 6 oder dem Antriebsstrang der Rundballenpresse 1 gekoppelt sein und über eine Kupplung zu- und abschaltbar sein. Die Zuführrolle 21 und die zweite Spannrolle 12.2 der Spannvorrichtung 11 können wahlweise mit gleicher oder relativer Umfangsgeschwindigkeit U zueinander in gegensinnige Drehrichtungen D antreibbar sein. Sofern die Zuführrolle 21 und die zweite Spannrolle 12.2 der Spannvorrichtung 11 mit der gleichen Umfangsgeschwindigkeit U betrieben werden, wird das Hüllmaterial H nur in der ersten Spannzone Z₁ gespannt und ummantelt mit der dort eingeprägten Spannung den Rundballen B in der Presskammer 5. Wird die Zuführrolle 21 hingegen so betrieben, dass sich eine relative Umfangsgeschwindigkeit U_{R2} zwischen der Zuführrolle 21 und der zweiten Spannrolle 12.2 ausbildet, insbesondere die Zuführrolle 21 schneller läuft als die zweite Spannrolle 12.2, wird das Hüllmaterial H in einer zwischen der Zuführrolle 21 und der zweiten Spannrolle 12.2 gebildeten zweiten Spannzone Z₂ zusätzlich gespannt. Das Hüllmaterial H wird demnach bei einer solchen Ausgestaltung mit einer Spannung um den Rundballen B in der Presskammer 5 ummantelt, welche sich aus der Summe der in der ersten Spannzone Z₁ und der zweiten Spannzone Z₂ aufgebrachten Spannung zusammensetzt. Entsprechendes ist auch bei einer der Presskammer 5 nachgeschalteten Einrichtung 9 zum Ummanteln möglich, wobei eine Zuführrolle 21 als Bestandteil der Einrichtung 9 bei dieser Anordnung entfällt und die Umfangsgeschwindigkeit U des auf dem Wickeltisch 10 befindlichen Rundballens B bzw. die Umfangsgeschwindigkeit U der Mittel zum Antreiben des auf dem Wickeltisch 10 befindlichen Rundballens R maßgeblich ist. In diesem Zusammenhang kann die Rundballenpresse 1 eine der Zuführrolle 21 oder der Presskammer 5 und eine dem Wickeltisch 10 zugeordnete Sensoreinrichtung 22 umfassen, die dazu vorgesehen und eingerichtet ist, die Umfangsgeschwindigkeit U der Zuführrolle 21 bzw. des Rundballens R mittelbar oder unmittelbar zu erfassen und ein die Umfangsgeschwindigkeit U repräsentierendes Signal der Steuereinrichtung 18 zur Weiterverarbeitung bereitzustellen.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Landwirtschaftliche Rundballenpresse | 19 | Sensoreinrichtung |
| | | 20 | Sensor |
| 2 | Pressengehäuse | 21 | Zuführrolle |
| 3 | Feststehendes Gehäuseteil | 22 | Sensoreinrichtung |
| 4 | Auswurfklappe | | |
| 5 | Presskammer | B | Rundballen |
| 6 | Pressmittel | H | Hüllmaterial |
| 7 | Einrichtung zum Aufnehmen von | V | Vorratsrolle |
| | Erntegut | F | Flussrichtung |
| 8 | Einrichtung zum Fördern von Erntegut | D | Drehrichtung |
| 9 | Einrichtung zum Ummanteln | D₁ | Drehrichtung erste Spannrolle |
| 10 | Wickeltisch | D₂ | Drehrichtung zweite Spannrolle |
| 11 | Spannvorrichtung | U | Umfangsgeschwindigkeit |
| 12 | Spannrollen | U₁ | Umfangsgeschwindigkeit erste Spannrolle |
| 12.1 | Erste Spannrolle | U₂ | Umfangsgeschwindigkeit zweite Spannrolle |
| 12.2 | Zweite Spannrolle | | |
| 13 | Motor | U_{R1} | Relative Umfangsgeschwindigkeit erste und zweite Spannrolle |
| 14 | Übersetzungsgetriebe | | |
| 15 | Arbeitshydraulik bzw. Arbeitshydraulikkreislauf der Rundballenpresse | U_{R2} | Relative Umfangsgeschwindigkeit zweite Spannrolle und Zuführrolle bzw. Rundballen |
| 16 | Ventil | Z₁ | Erste Spannzone |
| 17 | Arbeitshydraulik bzw. Arbeitshydraulikkreislauf der landwirtschaftlichen Arbeitsmaschine | Z₂ | Zweite Spannzone |
| | | P | Parameter |
| | | P_{E} | Einstellparameter |
| 18 | Steuereinrichtung | | |

## Patentansprüche

1. Landwirtschaftliche Rundballenpresse (1), die Folgendes umfasst:
- eine Einrichtung (7) zum Aufnehmen von Erntegut von einer landwirtschaftlichen Fläche;
- eine Presskammer (5) und ein die Presskammer (5) umfangsseitig begrenzendes Pressmittel (6) zum Pressen des aufgenommenen Ernteguts zu einem Rundballen (B); und
- eine Einrichtung (9) zum Ummanteln eines gepressten Rundballens (B) mit einem elastischen, bahnförmigen Hüllmaterial (H), welches mittels einer Vorratsrolle (V) bereitgestellt ist, wobei die Einrichtung (9) zum Ummanteln eine Spannvorrichtung (11) zum Spannen des Hüllmaterials (H) während eines Ummantelns eines gepressten Rundballens (B) umfasst;
**dadurch gekennzeichnet, dass**
die Spannvorrichtung (11) zwei drehbewegliche Spannrollen (12, 12.1, 12.2) umfasst, wobei das Hüllmaterial (H) zwischen den Spannrollen (12, 12.1, 12.2) geführt ist, wobei die Spannrollen (12, 12.1, 12.2) während eines Ummantelns eines gepressten Rundballens (B) aktiv antreibbar sind und zwar derart, dass sich die Spannrollen (12, 12.1, 12.2) mit einer relativen Umfangsgeschwindigkeit (U, U_{R1}) zueinander in gegensinnige Drehrichtungen (D, D₁, D₂) bewegen.

2. Landwirtschaftliche Rundballenpresse (1) nach Anspruch 1, **dadurch gekennzeichnet, dass** eine erste Spannrolle (12, 12.1) der zwei Spannrollen (12, 12.1, 12.2), welche das Hüllmaterial (H) während des Ummantelns in Flussrichtung (F) des Hüllmaterials (H) von der Vorratsrolle (V) hin zum Rundballen (B) zuerst passiert, während des Ummantelns eine geringere Umfangsgeschwindigkeit (U, U₁) aufweist als eine zweite Spannrolle (12, 12.2) der zwei Spannrollen (12, 12.1, 12.2), welche das Hüllmaterial (H) während des Ummantelns in Flussrichtung (F) des Hüllmaterials (H) von der Vorratsrolle (V) hin zum Rundballen (B) anschließend passiert.

3. Landwirtschaftliche Rundballenpresse (1) nach Anspruch 2, **dadurch gekennzeichnet, dass** die Umfangsgeschwindigkeit (U, U₁) der ersten Spannrolle (12, 12.1) in einem Bereich zwischen 60% und 80% der Umfangsgeschwindigkeit (U, U₂) der zweiten Spannrolle (12, 12.2) liegt.

4. Landwirtschaftliche Rundballenpresse (1) nach einem der Ansprüche 1 bis 3, **dadurch gekennzeichnet, dass** die Spannvorrichtung (11) einen Motor (13) umfasst, welcher mit einer der zwei Spannrollen (12, 12.1, 12.2) zum Antrieb derselben gekoppelt ist, wobei die zwei Spannrollen (12, 12.1, 12.2) mittels eines Übersetzungsgetriebes (14) trieblich miteinander verbunden sind.

5. Landwirtschaftliche Rundballenpresse (1) nach Anspruch 4, **dadurch gekennzeichnet, dass** das Übersetzungsgetriebe (14) als Stirnradgetriebe mit einem festen Übersetzungsverhältnis, insbesondere als Stirnradstufe, oder als stufenloses Übersetzungsgetriebe mit einem veränderlichen Übersetzungsverhältnis, insbesondere als Riemengetriebe, ausgebildet ist.

6. Landwirtschaftliche Rundballenpresse (1) nach einem der Ansprüche 1 bis 3, **dadurch gekennzeichnet, dass** die Spannvorrichtung (11) zwei Motoren (13) umfasst, wobei jeweils ein Motor (13) mit jeweils einer der zwei Spannrollen (12, 12.1, 12.2) zum Antrieb derselben gekoppelt ist.

7. Landwirtschaftliche Rundballenpresse (1) nach einem der Ansprüche 4 bis 6, **dadurch gekennzeichnet, dass** der Motor (13) als hydraulischer Motor ausgebildet ist, wobei der hydraulische Motor mit einer Arbeitshydraulik (15) der Rundballenpresse (1) strömungstechnisch verbunden ist, wobei die Arbeitshydraulik (15) der Rundballenpresse (1) ein zwischen einer Sperrstellung und einer Offenstellung zur Versorgung des hydraulischen Motors schaltbares, vorzugsweise elektrisch schaltbares, Ventil (16) umfasst.

8. Landwirtschaftliche Rundballenpresse (1) nach einem der Ansprüche 1 bis 7, **dadurch gekennzeichnet, dass** der Einrichtung (9) zum Ummanteln eine Steuereinrichtung (18) zugeordnet ist, welche dazu vorgesehen und eingerichtet ist, Betriebsparameter der Rundballenpresse (1) und/oder Parameter, die auf Bedienereingaben basieren, zu empfangen, zur Erzeugung von Einstellparameter (P_{E}) für die Einrichtung (9) zum Ummanteln zu verarbeiten und die erzeugten Einstellparameter (P_{E}) an der Einrichtung (9) zum Ummanteln durch Ansteuerung einzustellen.

9. Landwirtschaftliche Rundballenpresse (1) nach Anspruch 8, **dadurch gekennzeichnet, dass** die Steuereinrichtung (18) mit einer Anzeige- und Eingabeeinrichtung in datenübertragender Weise verbunden ist, welche dazu vorgesehen und eingerichtet ist, Bedienereingaben anzunehmen sowie Betriebsparameter der Rundballenpresse (1), Parameter, die auf Bedienereingaben basieren, und/oder Einstellparameter (P_{E}) für die Einrichtung (9) zum Ummanteln anzuzeigen.

10. Landwirtschaftliche Rundballenpresse (1) nach Anspruch 8 oder 9, **dadurch gekennzeichnet, dass** die Rundballenpresse (1) eine der Spannvorrichtung (11) zugeordnete Sensoreinrichtung (19) umfasst, welche dazu vorgesehen und eingerichtet ist, die Umfangsgeschwindigkeit (U, U₁, U₂) der ersten Spannrolle (12, 12.1) und/oder der zweiten Spannrolle (12, 12.2) zu erfassen und ein die entsprechende Umfangsgeschwindigkeit (U, U₁, U₂) repräsentierendes Signal zur Weiterverarbeitung der Steuereinrichtung (18) bereitzustellen.

11. Landwirtschaftliche Rundballenpresse (1) nach einem der Ansprüche 1 bis 10, **dadurch gekennzeichnet, dass** die Einrichtung (9) zum Ummanteln der Presskammer (5) vorgeschaltet oder nachgeschaltet ist.

12. Landwirtschaftliche Rundballenpresse (1) nach Anspruch 11, **dadurch gekennzeichnet, dass,** sofern die Einrichtung (9) zum Ummanteln der Presskammer (5) vorgeschaltet ist, die Einrichtung (9) zum Ummanteln eine antreibbare Zuführrolle (21) zum Zuführen des Hüllmaterials (H) in die Presskammer (5) umfasst, wobei die Zuführrolle (21) und die zweite Spannrolle (12, 12.2) der Spannvorrichtung (11) mit gleicher oder relativer Umfangsgeschwindigkeit (U, U_{R2}) zueinander in gegensinnige Drehrichtungen (D, D₂) antreibbar sind; oder, sofern die Einrichtung (9) zum Ummanteln der Presskammer (5) nachgeschaltet ist, die Einrichtung (9) zum Ummanteln einen Wickeltisch (10) mit Mitteln zum Antreiben eines auf dem Wickeltisch (10) befindlichen Rundballens (B) umfasst, wobei der Rundballen (B) und die zweite Spannrolle (12, 12.2) mit gleicher oder relativer Umfangsgeschwindigkeit (U, U_{R2}) zueinander in gegensinnige Drehrichtungen (D, D₂) antreibbar sind.

13. Landwirtschaftliche Rundballenpresse (1) nach Anspruch 12 in Kombination mit einem der Ansprüche 8 bis 10, **dadurch gekennzeichnet, dass** die Rundballenpresse (1), sofern die Einrichtung (9) zum Ummanteln der Presskammer (5) vorgeschaltet ist, eine der Zuführrolle (21) oder der Presskammer (5) und, sofern die Einrichtung (9) zum Ummanteln der Presskammer (5) nachgeschaltet ist, eine dem Wickeltisch (10) zugeordnete Sensoreinrichtung (22) umfasst, die dazu vorgesehen und eingerichtet ist, die Umfangsgeschwindigkeit (U) der Zuführrolle (21) bzw. des Rundballens (B) mittelbar oder unmittelbar zu erfassen und ein die Umfangsgeschwindigkeit (U) repräsentierendes Signal der Steuereinrichtung (18) zur Weiterverarbeitung bereitzustellen.

14. Landwirtschaftliche Rundballenpresse (1) nach einem der Ansprüche 1 bis 13, **dadurch gekennzeichnet, dass** eine Umfangsfläche zumindest einer der zwei Spannrollen (12, 12.1, 12.2), vorzugsweise jeder der zwei Spannrollen (12, 12.1, 12.2), zumindest bereichsweise mit einer Profilierung und/oder Beschichtung versehen ist.

15. Verfahren zum Betreiben einer landwirtschaftlichen Rundballenpresse (1) gemäß einem der Ansprüche 1 bis 14, die folgenden Verfahrensschritte umfassend:
- mittels einer Einrichtung (7) zum Aufnehmen von Erntegut der Rundballenpresse (1) wird Erntegut von einer landwirtschaftlichen Fläche aufgenommen;
- mittels einer Presskammer (5) und eines die Presskammer (5) umfangsseitig begrenzendes Pressmittels (6) der Rundballenpresse (1) wird das aufgenommene Erntegut zu einem Rundballen (B) gepresst; und
- mittels einer Einrichtung (9) zum Ummanteln der Rundballenpresse (1) wird ein gepresster Rundballen (B) mit einem elastischen, bahnförmigen Hüllmaterial (H), welches mittels einer Vorratsrolle (V) bereitgestellt wird, ummantelt, wobei das Hüllmaterial (H) während eines Ummantelns eines gepressten Rundballens (B) von einer Spannvorrichtung (11) gespannt wird,
**dadurch gekennzeichnet, dass**
die Spannvorrichtung (11) zwei drehbewegliche Spannrollen (12, 12.1, 12.2) umfasst, wobei das Hüllmaterial (H) zwischen den Spannrollen (12, 12.1, 12.2) geführt wird, wobei die Spannrollen (12, 12.1, 12.2) während eines Ummantelns eines gepressten Rundballens (B) aktiv angetrieben werden und zwar derart, dass sich die Spannrollen (12, 12.1, 12.2) mit einer relativen Umfangsgeschwindigkeit (U, U_{R1}) zueinander in gegensinnige Drehrichtungen (D, D₁, D₂) bewegen.
